# EUROPÄISCHE PATENTANMELDUNG

(11) **EP 4 427 968 A1**
(43) Veröffentlichungstag der Anmeldung: **11.09.2024**
(21) Anmeldenummer: 24158998.5
(22) Anmeldetag: 22.02.2024
(51) Int. Cl.: B60L 53/14, B60L 53/30, B60L 53/53

(54) **VORRICHTUNG MIT EINEM ELEKTRISCHEN LADESYSTEM FÜR EINE ELEKTRISCH ANGETRIEBENE MOBILE ARBEITSMASCHINE**

(30) Priorität: 06.03.2023 DE 102023105441
(71) Anmelder: Deere & Company, Moline, IL 61265 (US)
(72) Erfinder: Buhrke, Frank, Mannheim (DE)
(74) Vertreter: Dehnhardt, Florian Christopher

(57) **Zusammenfassung**

Die Erfindung betrifft eine Vorrichtung (10) mit einem elektrischen Ladesystem (12) zur elektrischen Aufladung einer Antriebsbatterie (14) einer elektrisch angetriebenen mobilen Arbeitsmaschine (16). Die Vorrichtung (10) ist als ein mobiler Anhänger für ein Anhängen an ein Zugfahrzeug ausgebildet.

## Beschreibung

Die Erfindung betrifft eine Vorrichtung mit einem elektrischen Ladesystem für eine elektrisch angetriebene mobile Arbeitsmaschine.

Ein elektrischer Batterieantrieb für elektrisch angetriebene mobile Arbeitsmaschinen kann gerade im landwirtschaftlichen Bereich im täglichen Einsatz, insbesondere bei Arbeitseinsätzen auf dem Feld, eine logistische Herausforderung sein.

Es ist daher Aufgabe der vorliegenden Erfindung, die Logistik für einen elektrischen Batterieantrieb einer elektrisch angetriebenen mobilen Arbeitsmaschine, insbesondere eines elektrisch angetriebenen landwirtschaftlichen Fahrzeugs, effizient zu unterstützen.

Diese Aufgabe wird durch eine Vorrichtung mit den Merkmalen des Patentanspruchs 1 gelöst.

Weitere vorteilhafte Ausgestaltungen der erfindungsgemäßen Vorrichtung gehen aus den Unteransprüchen hervor.

Gemäß Patentanspruch 1 weist eine Vorrichtung ein elektrisches Ladesystem zur elektrischen Aufladung einer Antriebsbatterie einer elektrisch angetriebenen mobilen Arbeitsmaschine auf. Die Vorrichtung ist als ein mobiler Anhänger für ein Anhängen an ein Zugfahrzeug ausgebildet. Bei der elektrisch angetriebenen mobilen Arbeitsmaschine handelt es sich insbesondere um ein elektrisch angetriebenes landwirtschaftliches Fahrzeug.

Somit ist die Vorrichtung mobil ausgebildet und kann deshalb flexibel zu unterschiedlichen Einsatzorten der dafür eingeplanten elektrisch angetriebenen mobilen Arbeitsmaschinen transportiert werden. Im Falle elektrisch angetriebener landwirtschaftlicher Fahrzeuge kann deren Elektroantrieb folglich auf einem Feld und insbesondere während eines Arbeitseinsatzes unterstützt werden, indem das elektrische Ladesystem der Vorrichtung an Ort und Stelle zur Verfügung steht. Hierdurch kann für die elektrisch angetriebenen mobilen Arbeitsmaschinen bzw. landwirtschaftlichen Fahrzeuge während ihrer Arbeitseinsätze elektrische Energie unabhängig von herkömmlichen Versorgungsnetzen bereitgestellt werden. Auf diese Weise bietet die Vorrichtung eine vorteilhafte logistische Unterstützung gerade bei der Durchführung landwirtschaftlicher Arbeiten durch elektrisch angetriebene landwirtschaftliche Fahrzeuge.

Bei dem vorgenannten Zugfahrzeug für den Transport der mobilen Vorrichtung handelt es sich z.B. um einen Traktor, eine Zugmaschine eines Lkw oder ein Geländefahrzeug.

Mittels des Zugfahrzeugs kann die mobile Vorrichtung zum Einsatzort der elektrisch angetriebenen mobilen Arbeitsmaschinen bzw. landwirtschaftlichen Fahrzeuge, insbesondere auf ein Feld, gezogen werden. Vorzugsweise ist die mobile Vorrichtung mit dem Zugfahrzeug reversibel (d.h. lösbar) koppelbar. Hierzu kann die mobile Vorrichtung eine geeignete Kopplungseinheit aufweisen.

Vorzugsweise handelt es sich bei der elektrisch angetriebenen mobilen Arbeitsmaschine bzw. dem landwirtschaftlichen Fahrzeug um einen Traktor oder Schlepper.

In einer bevorzugten Ausführungsform weist die Vorrichtung eine Stellfläche zur Aufnahme mindestens einer elektrisch angetriebenen mobilen Arbeitsmaschine auf. Hierdurch können mit dem Ladesystem gleichzeitig auch elektrisch angetriebene mobile Arbeitsmaschinen energiesparend zum geplanten Einsatzort transportiert werden.

Das elektrische Ladesystem der Vorrichtung weist vorzugsweise mindestens eine Ladestation zur elektrischen Aufladung einer Antriebsbatterie der jeweiligen elektrisch angetriebenen mobilen Arbeitsmaschine auf. Mit der oder den Ladestation(en) können spezifisch angepasste Ladekapazitäten abhängig von den verwendeten elektrisch angetriebenen mobilen Arbeitsmaschinen bereitgestellt werden. Zu diesem Zweck enthält die Ladestation vorzugsweise eine geeignete Pufferbatterie zur Speicherung elektrischer Energie, welche an die jeweilige elektrisch angetriebene mobile Arbeitsmaschine abgegeben werden kann.

In einer weiteren bevorzugten Ausführung der Vorrichtung ist die Ladestation an der Vorrichtung lösbar angeordnet. Hierdurch können Ladestationen an dem jeweiligen Einsatzort der elektrisch angetriebenen mobilen Arbeitsmaschinen flexibel abgestellt werden, was die logistische Unterstützung des Elektroantriebs weiter verbessert. Außerdem können derart mobile Ladestationen einfacher gewartet oder repariert werden. Darüber hinaus kann die Vorrichtung ohne die Ladestationen auch für andere Zwecke oder Transportaufgaben verwendet werden.

Ein baukastenartiger Aufbau der Vorrichtung mit von ihr lösbaren und mobilen Ladestationen kann technisch besonders effizient realisiert werden, indem die Vorrichtung vorzugsweise eine bewegliche Verstelleinrichtung aufweist (z.B. Kran, Gabelstapler, Kippmechanismus), welche zum Verstellen der Ladestation aus ihrer Transportposition an der Vorrichtung in eine abweichende Position außerhalb der Vorrichtung geeignet ist. Hierdurch kann die jeweilige Ladestation mit geringem Aufwand gezielt an einer bestimmten Position beispielsweise auf dem Feld abgestellt und dort betrieben werden, wo sie tatsächlich benötigt wird.

Die Verstelleinrichtung selbst ist - analog zu der Ladestation - vorzugsweise ebenfalls lösbar an der Vorrichtung angeordnet. Hierdurch kann die mobile Vorrichtung ohne eine Verstelleinrichtung auch für andere Zwecke oder Transportaufgaben verwendet werden.

Bevorzugt weist die Ladestation ein Ladekabel zur elektrischen Aufladung einer Antriebsbatterie einer elektrisch angetriebenen mobilen Arbeitsmaschine bzw. eine elektrisch angetriebenen landwirtschaftlichen Fahrzeugs auf. Hierdurch kann die Antriebsbatterie nicht nur auf dem Feld, sondern auch während des Transports der elektrisch angetriebenen mobilen Arbeitsmaschine bzw. des landwirtschaftlichen Fahrzeugs mittels der Vorrichtung aufgeladen werden. Dies erhöht die Arbeitseffizienz der jeweiligen elektrisch angetriebenen mobilen Arbeitsmaschine.

Weiter vorzugsweise weist das elektrische Ladesystem der Vorrichtung eine oder mehrere Stromspeichereinheiten auf. Diese können als Pufferbatterien mit möglichst großer Kapazität ausgebildet sein. Die Stromspeichereinheit(en) kann bzw. können über eine geeignete elektrische Verbindung, insbesondere eine Hochvolt-Verbindung, im Bereich der Vorrichtung an die Ladestation(en) elektrisch angeschlossen sein. Die an der Vorrichtung angeordneten Stromspeichereinheiten bieten die Möglichkeit, die Ladestationen während ihres Transports mittels der Vorrichtung und beispielsweise auch auf dem Feld bei Bedarf nachzuladen. Hierdurch können die Ladestationen über einen möglichst langen Zeitraum mit voller Ladekapazität bereitgestellt werden, was die Versorgung der elektrisch angetriebenen mobilen Arbeitsmaschinen mit elektrischer Energie noch effizienter gestaltet.

Die Stromspeichereinheit ist vorzugsweise an einer Seitenflanke oder an einer Unterseite der Vorrichtung angeordnet, so dass ein störungsfreies Rangieren und Positionieren der elektrisch angetriebenen mobilen Arbeitsmaschinen und/oder der Ladestation an der Vorrichtung unterstützt wird.

Insbesondere ist die Stromspeichereinheit an der Vorrichtung lösbar angeordnet, so dass sie nur bei Bedarf mit der Vorrichtung transportiert werden muss. Hierdurch kann die mobile Vorrichtung an den jeweiligen Einsatzfall individuell angepasst werden.

Vorzugsweise verfügt die Ladestation und/oder die Stromspeichereinheit jeweils über eine Netzstrom-Schnittstelle zur Aufnahme elektrischer Energie von einem Stromnetz. Somit können die verwendeten Ladestationen und/oder Stromspeichereinheiten technisch einfach und rasch nachgeladen werden, sobald ein Stromnetz, eine elektrische Energiequelle oder dergleichen zur Verfügung steht.

In einer weiteren bevorzugten Ausführungsform weist die Vorrichtung ein Steuersystem, insbesondere ein elektronisches Steuergerät, zur Steuerung des Betriebs des elektrischen Ladesystems auf. Beispielsweise kann das Steuersystem eine oder mehrere Ladestrategien enthalten, gemäß denen die verfügbare elektrische Energie möglichst effizient verteilt wird. Dies kann auch eine Priorisierung der Energiequelle (Stromnetz oder Stromspeichereinheit) für das Nachladen der Ladestation umfassen. Weiterhin kann das Steuersystem während des Transports der mobilen Vorrichtung oder am Einsatzort der elektrisch angetriebenen mobilen Arbeitsmaschinen den elektrischen Energiefluss zwischen den vorhandenen Stromspeichereinheiten, den Ladestationen und den Antriebsbatterien der elektrisch angetriebenen mobilen Arbeitsmaschinen steuern bzw. regeln. Auch eine Versorgung des die Vorrichtung ziehenden Zugfahrzeugs mit elektrischer Energie kann von dem Steuersystem gesteuert bzw. geregelt werden.

In einer weiteren Funktion kann das Steuersystem auch ein Wärmemanagement für die Ladestationen und/oder Stromspeichereinheiten enthalten. Dies unterstützt einen Betrieb der Ladestationen und/oder der Stromspeichereinheiten mit einem möglichst effizienten Ladeverhalten. Das Steuersystem kann hierbei mit einer Kühl- und/oder Heizeinrichtung kombiniert sein, um für alle verwendeten Ladestationen und/oder Stromspeichereinheiten optimale Temperaturverhältnisse zu erzeugen.

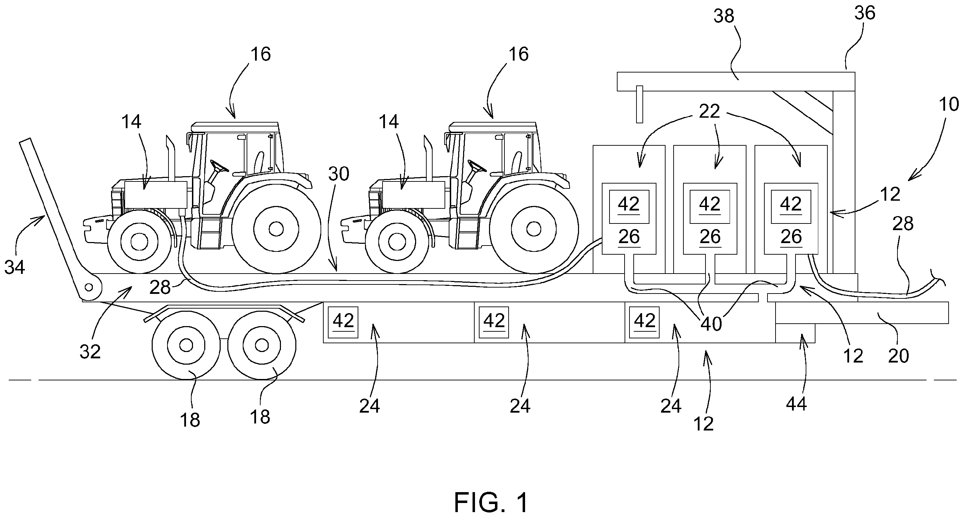

Die erfindungsgemäße Vorrichtung wird im Folgenden anhand der beigefügten Zeichnung näher erläutert.

Die einzige Figur zeigt eine schematische Seitenansicht einer erfindungsgemäßen mobilen Vorrichtung 10 mit einem elektrischen Ladesystem 12 zur elektrischen Aufladung einer Antriebsbatterie 14 einer elektrisch angetriebenen mobilen Arbeitsmaschine in Gestalt eines elektrisch angetriebenen landwirtschaftlichen Fahrzeugs 16, vorzugsweise in Form eines hier dargestellten Traktors.

Die Vorrichtung 10 ist als ein mobiler Anhänger mit mehreren Rädern 18 und einer Kopplungseinheit 20 ausgebildet. Mittels der lediglich schematisch dargestellten Kopplungseinheit 20 kann die mobile Vorrichtung 10 an ein hier nicht dargestelltes Zugfahrzeug gekoppelt bzw. angehängt werden und zum Einsatzort der landwirtschaftlichen Fahrzeuge 16, insbesondere auf einem Feld, gezogen werden.

Das elektrische Ladesystem 12 weist optional eine oder mehrere Ladestation(en) 22 sowie optional eine oder mehrere Stromspeichereinheit(en) 24 auf.

In den Ladestationen 22 ist jeweils eine Pufferbatterie 26 zur Speicherung elektrischer Energie integriert. Die Pufferbatterien 26 sind jeweils mit einem Ladekabel 28 elektrisch verbunden. Über das Ladekabel 28 kann die Ladestation 22 die Antriebsbatterie 14 des jeweiligen landwirtschaftlichen Fahrzeugs 16 elektrisch aufladen. Das elektrische Aufladen kann beispielsweise während des Transports des landwirtschaftlichen Fahrzeugs 16 auf der Vorrichtung 10 oder am Einsatzort, z.B. auf dem Feld, erfolgen.

Für den Transport der landwirtschaftlichen Fahrzeuge 16 weist die Vorrichtung 10 eine Stellfläche 30 auf, welche Bestandteil eines im Wesentlichen horizontal ausgerichteten Transportgestells 32 ist. Während an einem Endabschnitt des Transportgestells 32 die Kopplungseinheit 20 befestigt ist, befindet sich an einem gegenüberliegenden Endabschnitt des Transportgestells 32 eine Verladeklappe 34. Letztere ist an dem Transportgestell 32 (insbesondere schwenkbar) gelagert und kann in der dargestellten Schwenkposition zur Lagesicherung der landwirtschaftlichen Fahrzeuge 16 während ihres Transports beitragen. In einer heruntergeschwenkten Position kann die Verladeklappe 34 als Fahrrampe für die landwirtschaftlichen Fahrzeuge 16 dienen, damit diese beispielsweise vom Transportgestell 32 auf das Feld weggefahren werden oder vom Feld auf das Transportgestell 32 gefahren werden.

Neben den landwirtschaftlichen Fahrzeugen 16 sind auf dem Transportgestell 32 mehrere - hier drei - Ladestationen 22 aufgestellt. Die Ladestationen 22 sind an der mobilen Vorrichtung 10 vorzugsweise lösbar angeordnet, so dass die für den jeweiligen Einsatzzweck benötigte Anzahl der Ladestationen 22 transportiert werden kann.

An der Vorrichtung 10 ist eine bewegliche, hier lediglich schematisch dargestellte, bewegliche Verstelleinrichtung 36 angeordnet. Sie dient einem Verstellen der Ladestation 22 aus ihrer Transportposition an der Vorrichtung 10 in eine abweichende Position außerhalb der Vorrichtung 10, so dass die Ladestation 22 als eine mobile Einheit beispielsweise auf dem Feld an dem gewünschten Platz positioniert werden kann. Umgekehrt kann die Ladestation 22 mittels der Verstelleinrichtung 36 vom Feld wieder in ihre Transportposition auf dem Transportgestell 36 gehoben werden. Außerdem können einzelne Ladestationen 22 mittels der Verstelleinrichtung 36 an einer beliebigen Wartungs- und Reparaturstätte leicht ausgetauscht und ersetzt werden.

Die Verstelleinrichtung 36 hat beispielsweise eine kranartige Ausgestaltung. Mit einem beweglichen, insbesondere schwenkbaren, Greifarm 38 kann die Verstelleinrichtung 36 die Ladestation 22 erfassen und an die gewünschte Position überführen.

Wie bereits erwähnt, weist das elektrische Ladesystem 12 der mobilen Vorrichtung 10 mindestens eine Stromspeichereinheit 24 auf. In dem dargestellten Ausführungsbeispiel sind drei Stromspeichereinheiten 24 vorgesehen, welche an einer Unterseite des Transportgestells 32 angeordnet sind. Die Stromspeichereinheiten 24 sind an dem Transportgestell 32 vorzugsweise als Module lösbar angeordnet bzw. montiert, so dass immer die für den jeweiligen Einsatzzweck benötigte Anzahl der Stromspeichereinheiten 24 transportiert werden kann.

Die Stromspeichereinheiten 24 sind über eine geeignete elektrische Verbindung 40, insbesondere eine Hochvolt-Verbindung, an die Ladestationen 22 elektrisch angeschlossen. Auch besteht die Möglichkeit, mehrere Stromspeichereinheiten 24 parallel zu verschalten, um die Ladekapazität weiter zu erhöhen. Die an der Vorrichtung angeordneten Stromspeichereinheiten 24 dienen dazu, die Ladestationen 22 bzw. darüber die Antriebsbatterie 14 des jeweiligen landwirtschaftlichen Fahrzeugs 16 während ihres Transports mittels der Vorrichtung und beispielsweise auch auf dem Feld bei Bedarf nachzuladen.

Die Ladestationen 22 und die Stromspeichereinheiten 24 weisen jeweils eine Netzstrom-Schnittstelle 42 auf und können hierdurch rasch an entsprechenden Ladevorrichtungen des öffentlichen Netzes nachgeladen werden.

Die Vorrichtung 10 weist außerdem ein Steuersystem 44 zur Steuerung des Betriebs des elektrischen Ladesystems 12 auf.

Das Steuersystem 44 ist vorzugsweise als ein Steuergerät ausgebildet und an einer geeigneten Position der Vorrichtung 10, z.B. an einer Unterseite des Transportgestells 32, angeordnet. Um die verfügbare elektrische Energie während des Transports der mobilen Vorrichtung 10 durch ein Zugfahrzeug oder am Einsatzort der landwirtschaftlichen Fahrzeuge 16 möglichst effizient zu verteilen, ist das Steuersystem 44 mit dem elektrischen Ladesystem 12 in elektronisch bzw. elektrisch geeigneter Weise verbunden. Hierdurch kann das Steuersystem 44 den elektrischen Energiefluss zwischen den vorhandenen Stromspeichereinheiten 24, den Ladestationen 22 und den Antriebsbatterien 14 der landwirtschaftlichen Fahrzeuge 16 steuern bzw. regeln. Auch eine Versorgung eines die Vorrichtung 10 ziehenden Zugfahrzeugs mit elektrischer Energie kann von dem Steuersystem 44 gesteuert bzw. geregelt werden.

In einer weiteren Funktion kann das Steuersystem 44 auch ein Wärmemanagement für die Ladestationen 22 und/oder Stromspeichereinheiten 24 enthalten. Hierdurch wird ein möglichst effizientes Ladeverhalten bei dem Betrieb der Ladestationen 22 und/oder der Stromspeichereinheiten 24 unterstützt. Das Steuersystem 44 kann mit einer hier nicht dargestellten Kühl- und/oder Heizeinrichtung kombiniert sein, um für alle verwendeten Ladestationen 22 und/oder Stromspeichereinheiten 24 optimale Temperaturverhältnisse zu erzeugen.

Der Vollständigkeit halber sei darauf hingewiesen, dass einzelne dargestellte Details schematisch und/oder im Verhältnis zueinander nicht maßstäblich sind.

## Patentansprüche

1. Vorrichtung (10) mit einem elektrischen Ladesystem (12) zur elektrischen Aufladung einer Antriebsbatterie (14) einer elektrisch angetriebenen mobilen Arbeitsmaschine (16), wobei die Vorrichtung (10) als ein mobiler Anhänger für ein Anhängen an ein Zugfahrzeug ausgebildet ist.

2. Vorrichtung nach Anspruch 1, **gekennzeichnet durch** eine Kopplungseinheit (20) zur Kopplung mit einem Zugfahrzeug.

3. Vorrichtung nach Anspruch 1 oder 2, **gekennzeichnet durch** eine Stellfläche (30) zur Aufnahme mindestens einer elektrisch angetriebenen mobilen Arbeitsmaschine (16).

4. Vorrichtung nach einem der vorhergehenden Ansprüche, **dadurch gekennzeichnet, dass** das elektrische Ladesystem (12) mindestens eine Ladestation (22) zur elektrischen Aufladung einer Antriebsbatterie (14) der elektrisch angetriebenen mobilen Arbeitsmaschine (16) aufweist.

5. Vorrichtung nach Anspruch 4, **gekennzeichnet durch** eine bewegliche Verstelleinrichtung (36) zum Verstellen der Ladestation (22) aus ihrer Transportposition an der Vorrichtung (10) in eine davon abweichende Position außerhalb der Vorrichtung (10).

6. Vorrichtung nach einem der vorhergehenden Ansprüche, **dadurch gekennzeichnet, dass** die Ladestation (22) ein Ladekabel (28) zur elektrischen Aufladung einer Antriebsbatterie (14) der elektrisch angetriebenen mobilen Arbeitsmaschine (16) aufweist.

7. Vorrichtung nach einem der vorhergehenden Ansprüche, **dadurch gekennzeichnet, dass** das elektrische Ladesystem (12) mindestens eine Stromspeichereinheit (24) aufweist, welche über eine elektrische Verbindung (40) an mindestens eine Ladestation (22) elektrisch angeschlossen ist.

8. Vorrichtung nach Anspruch 7, **dadurch gekennzeichnet, dass** die Stromspeichereinheit (24) an der Vorrichtung (10) lösbar angeordnet ist.

9. Vorrichtung nach einem der vorhergehenden Ansprüche, **dadurch gekennzeichnet, dass** die Ladestation (22) und/oder die Stromspeichereinheit (24) jeweils eine Netzstrom-Schnittstelle (42) zur Aufnahme elektrischer Energie aufweist.

10. Vorrichtung nach einem der vorhergehenden Ansprüche, **gekennzeichnet durch** ein Steuersystem (44) zur Steuerung des Betriebs des elektrischen Ladesystems (12).
